# EUROPÄISCHE PATENTANMELDUNG

(11) **EP 1 498 365 A1**
(43) Veröffentlichungstag der Anmeldung: **19.01.2005**
(21) Anmeldenummer: 03405535.0
(22) Anmeldetag: 14.07.2003
(51) Int. Cl.: B65G 15/00, B65G 17/00

(54) **Vorrichtung zum Anheben einer Transportseite eines endlosen Transportbandes**

(71) Anmelder: Habasit AG, 4153 Reinach (CH)
(72) Erfinder: Bangerter, Alfred, 4148 Pfeffingen (CH)
(74) Vertreter: Bollhalder, Renato

(57) **Zusammenfassung**

Bei einer Vorrichtung zum Anheben einer Transportseite (41) eines endlosen Transportbandes (4), während dieses sich in einem gelösten Zustand befindet, ist die mit zu transportierenden Gütern belegbare Transportseite (41) des Transportbandes (4) durch eine Stützkonstruktion (3) gestützt. Die Vorrichtung umfasst Anhebemittel (1), mit denen die Transportseite (41) des Transportbandes (4) so anhebbar ist, dass sie in einem angehobenem Zustand die Stützkonstruktion (3) nicht mehr berührt und dass bei angehobener Transportseite (41) das Transportband (4) für ein Laufen ausreichend getragen und gespannt ist.

## Beschreibung

Die Erfindung betrifft eine Vorrichtung zum Anheben einer Transportseite eines endlosen Transportbandes gemäss dem Oberbegriff des unabhängigen Patentanspruchs 1.

Beim Betrieb von Transportbandanlagen besteht häufig die Notwendigkeit, Transportbänder und ihre Tragstruktur zu reinigen und zu warten. Insbesondere in der Lebensmittelindustrie, beispielsweise in der Fleischverarbeitung oder in der Backwarenindustrie, existieren Hygienebestimmungen, die eine regelmässige Reinigung der Transportbänder vorschreiben. Eine solche Reinigung ist nicht problemlos möglich, da üblicherweise das Transportband mit den Umlenkmitteln und zwei Seitenwänden einer Tragstruktur einen weitgehend geschlossenen Kasten bildet.

Mit dem Ziel, das Transportband und seine Tragstruktur einsehbar reinigen und die Reinigung auch optisch prüfen zu können, werden heute verschiedene konstruktive Lösungen eingesetzt.

Es werden beispielsweise Transportband-Tragstrukturen mit Seitenwänden mit möglichst grossen Öffnungen eingesetzt. Durch diese Öffnungen sind die Innenseiten des Transportbandes und die Umlenkmittel für eine Reinigung, beispielsweise mit einem Hochdruckreinigungsgerät, zugänglich. Die Zugänglichkeit ist allerdings eingeschränkt und eine umfassende visuelle Kontrolle ist erschwert, so dass keine vollständig einwandfreie Reinigung garantiert werden kann. Wird das Transportband mit seinem Eigengewicht und dem Gewicht von auf seiner Oberfläche positionierten Gütern durch eine Stützkonstruktion, wie z. B. Gleitleisten, getragen, so können auf diese Weise die Kontaktflächen zwischen Transportband und Stützkonstruktion nicht zuverlässig gereinigt werden.

Als Alternative sind Anhebeunterlagen bzw. -hebel im Einsatz, welche in der Tragstruktur des Transportbandes fest montiert oder mobil angebracht sind, und welche einen Teil des Transportbandes so anheben, dass der Raum zwischen einer Transport- und einer Rücklaufseite des Transportbandes einsehbar und zugänglich für eine Reinigung ist. Mit solchen bekannten Konstruktionen angehobene Transportbänder sind in angehobenem Zustand nicht lauffähig. Ausserdem ist die Transportseite des Transportbandes oft nicht ausreichend von der Stützkonstruktion und von Umlenkmitteln abgehoben, was deren Reinigung erschwert.

Der vorliegenden Erfindung liegt daher die Aufgabe zu Grunde, eine Vorrichtung zum Anheben einer Transportseite eines endlosen Transportbandes zu schaffen, die die Voraussetzungen für eine einfachere, visuell kontrollierbare Reinigung des Transportbandes, der Stützkonstruktion und der Umlenkmittel schafft.

Diese Aufgabe wird erfindungsgemäss durch eine Vorrichtung gelöst, wie sie im unabhängigen Patentanspruch 1 definiert ist. Vorteilhafte Ausführungsvarianten der erfindungsgemässen Vorrichtung ergeben sich aus den abhängigen Patentansprüchen.

Das Wesen der Erfindung besteht im Folgenden: Bei einer Vorrichtung zum Anheben einer Transportseite eines endlosen Transportbandes, während dieses sich in einem gelösten Zustand befindet, ist die mit zu transportierenden Gütern belegbare Transportseite des Transportbandes durch eine Stützkonstruktion gestützt. Die Vorrichtung umfasst Anhebemittel, mit welchen die Transportseite des Transportbandes so anhebbar ist, dass diese in einem angehobenem Zustand die Stützkonstruktion nicht mehr berührt und dass bei angehobener Transportseite das Transportband für ein Laufen ausreichend getragen und gespannt ist.

Die erfindungsgemässe Vorrichtung hat den Vorteil, dass durch das vollständige Abheben der Transportseite des Transportbandes von der Stützkonstruktion, über welche das Transportband geführt ist, insbesondere das Transportband und die Stützkonstruktion einfacher für eine Reinigung zugänglich und visuell kontrollierbar sind.

Ein Laufen des Transportbandes bei angehobener Transportseite vereinfacht die Reinigung weiter und ermöglicht, dass das Transportband über seine gesamte Länge eingesehen und unter identischen Bedingungen gereinigt werden kann. Ausserdem kann mittels einer entsprechend konzipierten mobilen Reinigungsvorrichtung, welche beispielsweise bei angehobener Transportseite des Transportbandes seitlich eingefahren wird, das Transportband kontinuierlich automatisiert gereinigt werden. Eine sonst übliche Demontage des Transportbandes für eine Reinigung in einer speziellen Reinigungsanlage entfällt.

Mit Vorteil ist die Transportseite des Transportbandes mit den Anhebemitteln über die ganze Breite des Transportbandes gleichmässig anhebbar. Dadurch kann ein gleichmässiger Lauf des angehobenen Transportbandes sichergestellt werden.

Bevorzugt ist die Transportseite des Transportbandes mit den Anhebemitteln um mindestens 100 mm anhebbar. Dies ermöglicht eine automatische Reinigung des angehobenen Transportbandes mit einer handelsüblichen mobilen Reinigungsvorrichtung.

Vorteilhafterweise ist das Transportband über Umlenkmittel geführt und ist die Transportseite des Transportbandes mit den Anhebemitteln so anhebbar, dass sie im Bereich der Umlenkmittel in einem Winkel von mindestens 30°, vorzugsweise mindestens 40°, ansteigt. Dadurch ist auch der Bereich der Umlenkmittel einsehbar und reinigbar.

Die erfindungsgemässe Vorrichtung umfasst vorzugsweise zwischen der Transportseite und einer Rücklaufseite des Transportbandes angeordnete Anhebemittel. Eine solche Anordnung erlaubt eine einfache, kompakte Realisierung der erfindungsgemässen Vorrichtung.

Mit Vorteil umfassen die Anhebemittel in Laufrichtung des Transportbandes angeordnete Hebel, welche jeweils an ihren einen Enden eine Bandauflage aufweisen, auf der das Transportband bei angehobener Transportseite lauffähig aufliegt. Eine solche Anordnung von Hebeln ermöglicht ein in Laufrichtung des Transportbandes durchgehendes Anheben der Transportseite des Transportbandes, ohne dass ein zu grosser Durchhang das Laufen des Transportbandes behindert.

Bevorzugt sind jeweils mehrere Hebel über eine etwa parallel zur Transportseite des Transportbandes angeordnete, drehbar gelagerte Drehachse drehfest miteinander verbunden. Dies ermöglicht auf einfache Weise das gleichmässige Anheben der Transportseite über die ganze Breite.

In einer bevorzugten Ausführungsvariante umfassen die Anhebemittel eine Zugkonstruktion, welche mehrere der Drehachsen miteinander verbindet, so dass diese gemeinsam drehbar sind. Über eine solche Zugkonstruktion können die Anhebemittel gemeinsam betätigt werden.

Die Vorrichtung umfasst vorzugsweise einen Betätigungshebel zur Betätigung der Zugkonstruktion. Mit einem solchen Betätigungshebel können die Zugkonstruktion und mit ihr die Hebel zusammen manuell betätigt werden. Wenn die erforderliche Kraft für die manuelle Betätigung zu gross wird, kann die Anhebevorrichtung über die Länge der Transportseite in mehrere Teile unterteilt oder motorisch betrieben werden.

In einer bevorzugten Ausführungsvariante umfasst die Vorrichtung Mittel zum motorischen Betreiben der Zugkonstruktion, insbesondere ein pneumatisches oder elektrisches Stellwerk. Solche Mittel ermöglichen ein einfaches Betreiben der Vorrichtung ohne manuellen Aufwand.

Mit. Vorteil umfasst die Vorrichtung Mittel zur Blockierung der Anhebemittel, mit welchen die Anhebemittel bei angehobener Transportseite des Transportbandes fixierbar sind, so dass die Hebel nicht mehr drehbar sind. Damit können die Anhebemittel in bevorzugten Positionen, insbesondere einer Position, in der die Transportseite des Transportbandes optimal angehoben ist und einer Position, in der die Transportseite des Transportbandes vollständig auf der Stützkonstruktion aufliegt, fixiert werden. Auf diese Weise wird verhindert, dass die Hebel ungewollt, beispielsweise durch das Laufen des Transportbandes, gedreht werden.

In einer bevorzugten Ausführungsvariante sind die Bandauflagen als Rollen ausgestaltet. Eine auf Rollen als Bandauflagen laufende Transportseite eines Transportbandes läuft mit weniger Reibung, was das Transportband und die Hebel mechanisch weniger beansprucht.

Im Folgenden wird die erfindungsgemässe Vorrichtung zum Anheben einer Transportseite eines endlosen Transportbandes unter Bezugnahme auf die beigefügten Zeichnungen detaillierter beschrieben. Es zeigen:
- Fig. 1 -: eine Seitenansicht einer Transportbandförderanlage mit einem Ausführungsbeispiels einer erfindungsgemässen Vorrichtung zum Anheben einer Transportseite eines endlosen Transportbandes in nicht angehobenem Zustand, wobei eine Seitenwand der Transportbandförderanlage nicht gezeichnet ist;
- Fig. 2 -: einen Schnitt durch die Transportbandförderanlage gemäss Fig. 1 entsprechend der Linie A-A, wobei das Transportband ohne Banddurchhang dargestellt ist;
- Fig. 3 -: eine Seitenansicht einer Transportbandförderanlage ähnlich derjenigen von Fig. 1, bei der sich die erfindungsgemässe Vorrichtung in angehobenem Zustand befindet, wobei eine Seitenwand der Transportbandförderanlage nicht gezeichnet ist;
- Fig. 4 -: einen Schnitt durch die Transportbandförderanlage gemäss Fig. 3 entsprechend der Linie B-B, wobei das Transportband ohne Banddurchhang dargestellt ist; und
- Fig. 5 -: eine perspektivische Ansicht eines Teils einer Transportbandförderanlage ähnlich derjenigen von Fig. 1 mit einer als Zugkabel ausgestalteten Zugkonstruktion.

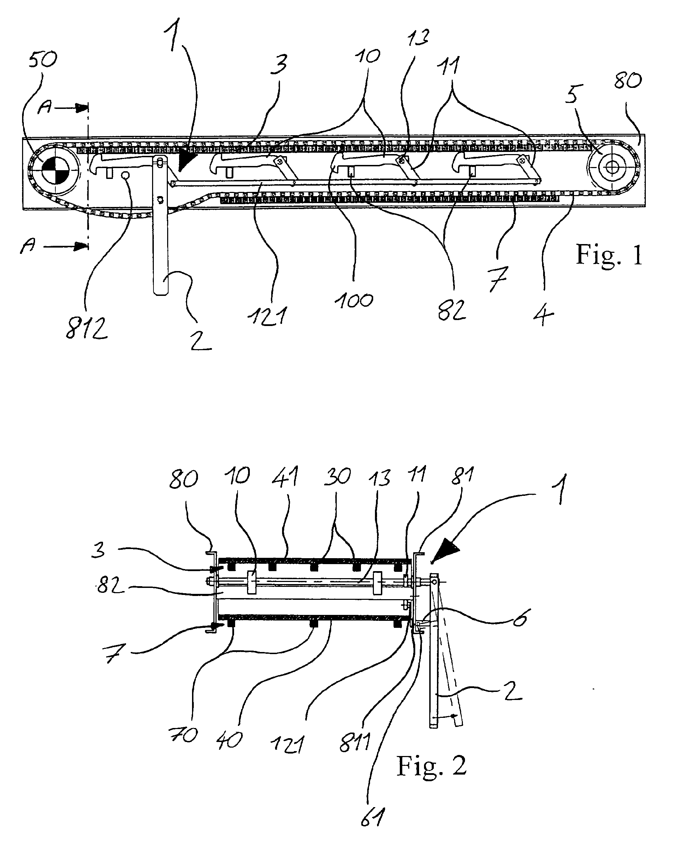

In den Fig. 1 und 2 ist ein Ausführungsbeispiel einer Transportbandförderanlage mit einer erfindungsgemässen Vorrichtung zum Anheben einer Transportseite 41 eines endlosen Transportbandes 4 in nicht angehobenem Zustand abgebildet. Die Transportseite 41 des Kunststoffglieder umfassenden, endlosen Transportbandes 4 ist horizontal über eine Stützkonstruktion 3 geführt, die fünf in Laufrichtung des Transportbandes 4 angeordnete, von einander beabstandete Gleitleisten 30 umfasst. An den beiden Enden der Transportbandförderanlage wird das Transportband 4 jeweils über Umlenkmittel 5 bzw. 50 um 180° umgeleitet. Auf der zwischen den Umlenkmitteln 5, 50 angeordneten Transportseite 41 können Güter für den Transport positioniert werden. Das Transportband 4 umfasst ausserdem eine Rücklaufseite 40, welche im unteren Teil der Transportbandförderanlage zwischen den Umlenkmitteln 5, 50 angeordnet ist und welche nach dem das Transportband 4 antreibenden Umlenkmittel 50 einen Banddurchhang aufweist. Die Rücklaufseite 40 ist durch eine Rücklaufstützkonstruktion 7, die drei Gleitleisten 70 umfasst, teilweise gestützt.

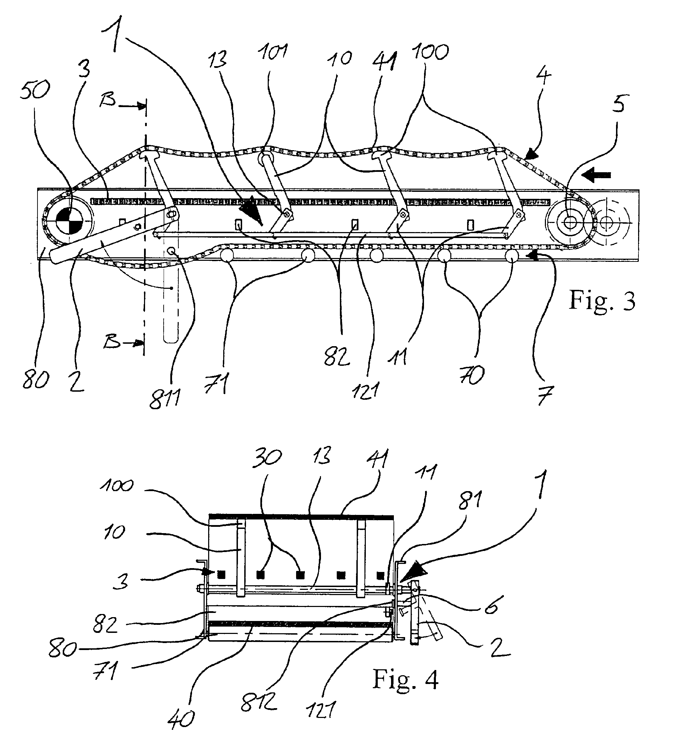

Zwischen der Transportseite 41 und der Rücklaufseite 40 sind Anhebemittel 1 angeordnet, welche Hebel 10, Drehachsen 13, Kurbelhebel 11 und eine eine Zugstange 121 aufweisende Zugkonstruktion umfassen. Mehrere Hebel 10 sind der Länge nach horizontal in Laufrichtung des Transportbandes 4 nacheinander angeordnet. In Querrichtung des Transportbandes 4 sind jeweils zwei Hebel 10 zwischen jeweils zwei Gleitleisten 30 der Stützkonstruktion 3 angeordnet und an ihren einen Enden mit einer Drehachse 13 und somit miteinander drehfest verbunden. Die Hebel 10 umfassen an ihren anderen Enden Bandauflagen 100, welche von der Form und vom Material her so beschaffen sind, dass sich die Hebel 10 bei gelöstem Transportband 4 mit möglichst wenig Kraftaufwand aufstellen lassen (s. Fig. 3) und dass sie einen möglichst kleinen Reibungskoeffizient bezüglich dem Transportband 4 aufweisen. Jede der Drehachsen 13 ist drehbar in Seitenwänden 80, 81 der Transportbandförderanlage gelagert, welche durch Verbindungsstege 82 miteinander verbunden sind. Auf den Drehachsen 13 ist jeweils auf einer Seite in unmittelbarer Nähe der Seitenwand 81 ein Kurbelhebel 11 drehfest angebracht. An ihrem den Drehachsen 13 abgewandten Ende sind die Kurbelhebel 11 jeweils mit der horizontal angeordneten Zugstange 121 drehbar verbunden, so dass die Anhebemittel 1 gemeinsam betätigt werden können.

Ein Betätigungshebel 2 ist mit einer der Drehachsen 13 dergestalt drehfest und ausschwenkbar verbunden, dass er im in den Fig. 1 und 2 gezeigten, nicht angehobenen Zustand des Transportbandes 4 ungefähr senkrecht angeordnet ist. Der Betätigungshebel 2 ist von der Seitenwand 81 der Transportbandförderanlage nach aussen schwenkbar, um die Betätigung zu erleichtern und eine Blockierung zu ermöglichen. Am Betätigungshebel 2 ist als Mittel zur Blockierung der Anhebemittel 1 ein Sicherungsbolzen 6 angeordnet, welcher über eine Aussparung 811 in der Seitenwand 81 der Transportbandförderanlage fixierbar ist. Der Sicherungsbolzen 6 weist einen Kopf 61 auf, der so ausgeführt ist, dass er mit einem minimalen Spiel durch die Aussparung 811 geführt werden kann. Hinter dem Kopf 61 ist der Sicherungsbolzen 6 verjüngt und liegt mit diesem Bereich infolge der Schwerkraft in der Aussparung 811 in der Seitenwand 81 auf. Ein unbeabsichtigtes Ausschwenken des Betätigungshebels 2 wird so verhindert, da der Kopf 61 genau mit der Aussparung 811 in Übereinstimmung gebracht werden muss, damit der Sicherungsbolzen 6 gelöst werden kann. Auf diese Weise können die Anhebemittel 1 im nicht angehobenen Zustand des Transportbandes 4 blockiert werden und der Betätigungshebel 2 kann nicht ungewollt und störend von der Transportbandförderanlage wegschwenken.

Für die gesamte Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden oder nachfolgenden Figurenbeschreibungen Bezug genommen.

Die Fig. 3 und 4 zeigen eine Vorrichtung ähnlich derjenigen der Fig. 1 und 2, aber in angehobenem Zustand. Eine der Bandauflagen ist beispielhaft als Rolle 101 ausgestaltet, was in Bezug auf ein einfaches. widerstandsarmes Anheben des Transportbandes 4 und in Bezug auf ein reibungsarmes Laufen desselben bei angehobener Transportseite 41 vorteilhaft sein kann. Die Rücklaufstützkonstruktion 7 umfasst hier beispielhaft quer zur Laufrichtung des Transportbandes 4 angebrachte Stützrollen 71.

Eine Verringerung des Abstandes zwischen den beiden Umlenkmitteln 5 und 50 löst das Transportband 4, was ein Anheben seiner Transportseite 41 ermöglicht. Ein Drehen des Betätigungshebels 2 im Uhrzeigersinn bewirkt ein Drehen der Drehachse 13, mit der der Betätigungshebel drehfest verbunden ist. Über die Zugstange 121 und die Kurbelhebel 11 werden die weiteren Drehachsen 13 gleichzeitig gedreht. Dadurch werden die Hebel 10 von einer horizontalen Stellung in Richtung einer vertikalen Stellung gedreht. Das Transportband 4 liegt mit seiner Transportseite 41 auf den Bandauflagen 100 bzw. der Rolle 101 auf und wird mit zunehmender Drehung der Hebel 10 zunehmend angehoben. In einer bestimmten Drehposition des Betätigungshebels 2, bei einer gewünschten Stellung der Hebel 10, welche nicht ganz vertikal ist, wird der Betätigungshebel 2 mittels des Sicherungsbolzens 6 an einer Aussparung 812 (s. auch Fig. 1) in der Seitenwand 81 der Transportbandförderanlage fixiert. Die Anhebemittel 1 sind dadurch in angehobenem Zustand blockiert, was ein ungewolltes Drehen derselben, insbesondere in Richtung des nicht angehobenen Zustands, verhindert, und der Betätigungshebel 2 kann dadurch nicht ungewollt und störend von der Transportbandförderanlage wegschwenken.

Das Anheben der Transportseite 41 des gelösten Transportbandes 4 streckt das Transportband 4 wieder, so dass es in angehobenem Zustand zum Laufen ausreichend gespannt ist.

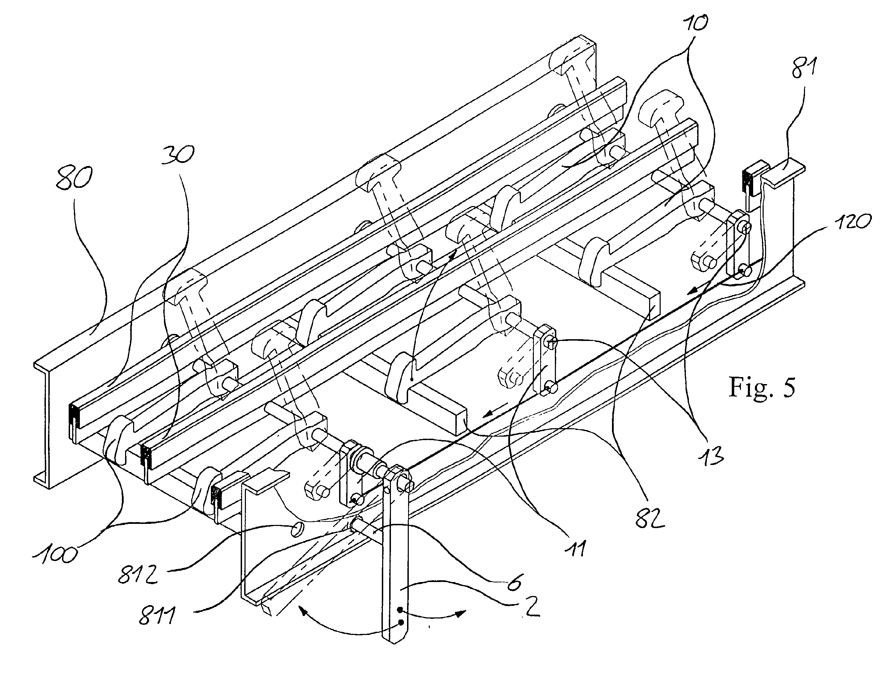

Fig. 5 zeigt einen Teil einer Vorrichtung ähnlich derjenigen in den Fig. 1 und 2 in einer perspektivischen Ansicht. Im Unterschied zu dieser umfasst die Zugkonstruktion hier anstelle der Zugstange 121 ein Zugkabel 120.

Der Übersichtlichkeit halber sind in Fig. 5 das Transportband 4, die Bereiche der Transportbandförderanlage um die Umlenkmittel 5, 50 und die Rücklaufstützkonstruktion 7 nicht dargestellt.

Zu den vorbeschriebenen erfindungsgemässen Vorrichtungen sind weitere konstruktive Variationen realisierbar. Hier ausdrücklich erwähnt sei noch, dass die Anhebemittel 1 Mittel zum motorischen Betreiben der Zugkonstruktion 120, 121 umfassen können, insbesondere ein pneumatisches oder elektrisches Stellwerk.

## Patentansprüche

1. Vorrichtung zum Anheben einer Transportseite (41) eines endlosen Transportbandes (4), während dieses sich in einem gelösten Zustand befindet, wobei die mit zu transportierenden Gütern belegbare Transportseite (41) des Transportbandes (4) durch eine Stützkonstruktion (3) gestützt ist, **dadurch gekennzeichnet, dass** sie Anhebemittel (1) umfasst, mit welchen die Transportseite (41) des Transportbandes (4) so anhebbar ist, dass diese in einem angehobenem Zustand die Stützkonstruktion (3) nicht mehr berührt und dass bei angehobener Transportseite (41) das Transportband (4) für ein Laufen ausreichend getragen und gespannt ist.

2. Vorrichtung nach Anspruch 1, **dadurch gekennzeichnet, dass** die Transportseite (41) des Transportbandes (4) mit den Anhebemitteln (1) über die ganze Breite des Transportbandes (4) gleichmässig anhebbar ist.

3. Vorrichtung nach Anspruch 1 oder 2, **dadurch gekennzeichnet, dass** die Transportseite (41) des Transportbandes (4) mit den Anhebemitteln (1) um mindestens 100 mm anhebbar ist.

4. Vorrichtung nach einem der Ansprüche 1 bis 3, **dadurch gekennzeichnet, dass** das Transportband (4) über Umlenkmittel (5, 50) geführt ist und die Transportseite (41) des Transportbandes (4) mit den Anhebemitteln (1) so anhebbar ist, dass sie im Bereich der Umlenkmittel (5, 50) in einem Winkel von mindestens 30°, vorzugsweise mindestens 40°, ansteigt.

5. Vorrichtung nach einem der Ansprüche 1 bis 4, **dadurch gekennzeichnet, dass** die Anhebemittel (1) zwischen der Transportseite (41) und einer Rücklaufseite (40) des Transportbandes (4) angeordnet sind.

6. Vorrichtung nach einem der Ansprüche 1 bis 5, **dadurch gekennzeichnet, dass** die Anhebemittel (1) in Laufrichtung des Transportbandes (4) angeordnete Hebel (10) umfassen, welche jeweils an ihren einen Enden eine Bandauflage (100; 101) aufweisen, auf der das Transportband (4) bei angehobener Transportseite (41) lauffähig aufliegt.

7. Vorrichtung nach Anspruch 6, **dadurch gekennzeichnet, dass** jeweils mehrere Hebel (10) über eine etwa parallel zur Transportseite (41) des Transportbandes (4) angeordnete, drehbar gelagerte Drehachse (13) drehfest miteinander verbunden sind.

8. Vorrichtung nach Anspruch 7, **dadurch gekennzeichnet, dass** die Anhebemittel (1) eine Zugkonstruktion (120; 121) umfassen, welche mehrere der Drehachsen (13) miteinander verbindet, so dass diese gemeinsam drehbar sind.

9. Vorrichtung nach Anspruch 8, **dadurch gekennzeichnet, dass** sie einen Betätigungshebel (2) zur Betätigung der Zugkonstruktion (120; 121) umfasst.

10. Vorrichtung nach Anspruch 8 oder 9, **dadurch gekennzeichnet, dass** sie Mittel zum motorischen Betreiben der Zugkonstruktion (120; 121), insbesondere ein pneumatisches oder elektrisches Stellwerk, umfasst.

11. Vorrichtung nach einem der Ansprüche 6 bis 10, **dadurch gekennzeichnet, dass** sie Mittel (6) zur Blockierung der Anhebemittel (1) umfasst, mit welchen die Anhebemittel (1) bei angehobener Transportseite (41) des Transportbandes (4) fixierbar sind, so dass die Hebel (10) nicht mehr drehbar sind.

12. Vorrichtung nach einem der Ansprüche 6 bis 11, **dadurch gekennzeichnet, dass** die Bandauflagen als Rollen (101) ausgestaltet sind.
